# EUROPÄISCHE PATENTANMELDUNG

(11) **EP 4 485 097 A1**
(43) Veröffentlichungstag der Anmeldung: **01.01.2025**
(21) Anmeldenummer: 23181929.3
(22) Anmeldetag: 28.06.2023
(51) Int. Cl.: G05B 19/042

(54) **VERFAHREN FÜR EINE COMPUTER-GESTÜTZTE INSTALLATION VON RÄUMLICH DEZENTRAL ANGEORDNETEN, ELEKTRISCHEN KOMPONENTEN EINER MASCHINE**

(71) Anmelder: Murrelektronik GmbH, 71570 Oppenweiler (DE)
(72) Erfinder: Pfestorf, Sebastian, 76137 Karlsruhe (DE); Zeller, Paul, 74223 Flein (DE)
(74) Vertreter: Goebel, Sebastian

(57) **Zusammenfassung**

Die Erfindung betrifft ein Verfahren (100) für eine computer-gestützte Installation von räumlich dezentral angeordneten, elektrischen Komponenten (4) einer Maschine (1), insbesondere einer elektrischen Anlage (1).

## Beschreibung

Die vorliegende Erfindung betrifft allgemein das Gebiet der Planung und Montage von Maschinen wie Automatisierungsanlagen, und insbesondere eine computer-gestützte Installation von räumlich dezentral angeordneten, elektrischen Komponenten einer Maschine.

### Stand der Technik

Die Komplexität und Vielfalt von Automatisierungsanlagen, die entwickelt, geplant, installiert, gewartet und repariert werden müssen, nehmen kontinuierlich zu. In sämtlichen Phasen des Lebenszyklus solcher Anlagen - sei es bei der Entwicklung, Planung, Produktion, Inbetriebsetzung, dem Betrieb oder der Wartung - gewinnt eine effiziente und effektive Unterstützung für Installateure und Planer durch umfangreiche sowie vollständige Dokumentation zunehmend an Bedeutung. Leider erfüllt die vorliegende Dokumentation in der Praxis oft nicht diesen Anspruch. Zum Beispiel können schlecht koordinierte Arbeitsprozesse oder die Verwendung unzureichender Dokumentationstools dazu führen, dass Installationsaktivitäten unzureichend oder unvollständig erfasst werden. Diese bekannten Umstände führen zwangsläufig zu Lücken in der Anlagendokumentation, was wiederum die zuverlässige Wartung oder Reparatur einer Anlage erschwert oder im schlimmsten Fall sogar unmöglich macht.

Die zugrunde liegende Aufgabe dieser Erfindung besteht insbesondere darin, eine Lösung bereitzustellen, die eine einfache, schnelle, sichere und fehlerfreie Installation von elektrischen Komponenten ermöglicht und dabei zumindest teilweise die oben genannten Nachteile des Standes der Technik überwindet.

### Offenbarung der Erfindung

Gegenstand der Erfindung ist ein Verfahren mit den Merkmalen des Anspruchs 1, ein System mit den Merkmalen des Anspruchs 13, ein Computerprogramm mit den Merkmalen des Anspruchs 14 sowie eine Vorrichtung mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System, dem erfindungsgemäßen Computerprogramm sowie der erfindungsgemäßen Vorrichtung, und jeweils umgekehrt, so dass bezüglich der Offenbarung zu den einzelnen Erfindungsaspekten stets wechselseitig Bezug genommen wird bzw. werden kann.

Gegenstand der Erfindung ist insbesondere ein, vorzugsweise computerimplementiertes, Verfahren für eine computer-gestützte Installation von räumlich dezentral angeordneten, elektrischen Komponenten einer Maschine, insbesondere einer elektrischen Anlage, vorzugsweise einer Automatisierungsanlage. Dabei können die nachfolgenden Schritte des Verfahrens vorgesehen sein, welche vorzugsweise nacheinander und/oder wiederholt ausgeführt werden:
Gemäß einem ersten Verfahrensschritt kann ein Bereitstellen einer Installationsvorgabe, insbesondere eines elektrischen Schaltplans, vorgesehen sein. Dabei kann die Installationsvorgabe eine Zuordnung der jeweiligen Komponenten zu einem oder mehreren Installationsorten der Maschine spezifizieren. Die Installationsvorgabe kann bspw. in digitaler Form bereitgestellt werden und hierzu bspw. in einem Datenspeicher und/oder einer Datenbank nicht-flüchtig gespeichert sein. Der elektrische Schaltplan kann z. B. über eine Software über eine grafische Benutzeroberfläche erstellt worden sein. Die grafische Benutzeroberfläche ermöglicht bspw. eine Auswahl und Platzierung von symbolischen Repräsentationen elektrischer Betriebsmittel der Maschine, bspw. der Komponenten. Durch die Verwendung von Algorithmen zur Verbindungserkennung und automatischen Verbindungsführung können die Betriebsmittel miteinander verbunden werden, um die elektrischen Verbindungen im Schaltplan darzustellen. Darüber hinaus können Datenstrukturen und Validierungsregeln implementiert sein, um die Konsistenz und Fehlerfreiheit des Schaltplans sicherzustellen. Dabei können im Schaltplan Installationsorte für die Komponenten festgelegt und ggf. in einem Anschlussplan angegeben sein. Der Anschlussplan kann dabei die genauen Positionen und Verbindungen dieser Installationsorte angeben, um eine klare und eindeutige Darstellung der elektrischen Verkabelung und Anschlüsse zu ermöglichen. Dadurch können Installateure effizient und korrekt die Verbindungen zwischen den Betriebsmitteln und den entsprechenden Steckplätzen herstellen. Die Installationsorte umfassen bspw. physische Steckplätze und/oder physische Anschlüsse und/oder örtliche Bereiche der Maschine.

Die Installationsvorgabe kann für den einen oder die mehreren Installationsorte jeweils eine Installationskennzeichnung, insbesondere Betriebsmittelkennzeichnung, und Artikelkennzeichnung, insbesondere Artikelnummer, festlegen, vorzugsweise als eine eindeutige Kennzeichnung. Damit ist eine eindeutige Zuordnung der Komponenten zu den Installationsorten möglich, welche vorzugsweise die tatsächliche Installation der Komponenten an der Maschine repräsentiert.

Die Installationskennzeichnung und vorzugsweise die Betriebsmittelkennzeichnung bezieht sich insbesondere auf die Kennzeichnung der Komponenten bzw. allgemein von elektrischen Betriebsmitteln, um Informationen über deren Gattung und/oder Identität und/oder Funktion und/oder Eigenschaften und/oder Sicherheitsmerkmale bereitzustellen. Diese Kennzeichnungen können herkömmlicherweise nicht nur im Schaltplan angegeben, sondern auch in Form von physischen Identifikationsmitteln wie Aufklebern, Schildern, Etiketten oder Markierungen auf den Betriebsmitteln selbst angebracht sein. Die Installations- bzw. Betriebsmittelkennzeichnung kann dabei wichtige Informationen wie die Gerätebezeichnung und/oder Seriennummer und/oder Spannungsbereich und/oder Leistungsaufnahme und/oder Herstellerangaben und/oder Warnhinweise und/oder andere relevante Informationen umfassen. Die Installations- bzw. Betriebsmittelkennzeichnung kann bei der Planung der Maschine bestimmt und im Schaltplan hinterlegt werden. Bei herkömmlichen Lösungen wird zudem die Installations- bzw. Betriebsmittelkennzeichnung manuell an dem Betriebsmittel wie der Komponente physisch angebracht.

Gemäß einem weiteren Verfahrensschritt kann ein Empfangen eines Identifikators einer zu installierenden Komponente der Komponenten vorgesehen sein. Dabei kann sich der Identifikator von der Installationskennzeichnung in der Installationsvorgabe und insbesondere auch von den herkömmlicherweise genutzten Installations- bzw. Betriebsmittelkennzeichnungen unterscheiden. Wie bei diesen kann der Identifikator zwar auch über ein physisches Identifikationsmittel an der Komponente angebracht sein, z. B. aufgedruckt sein. Dies kann jedoch originär und generisch bei den Komponenten erfolgen, unabhängig von einem konkreten Schaltplan oder einer konkreten Installation. Bspw. können Komponenten wie Kabel originär mit einer Serien- und/oder Artikelkennzeichnung versehen sein oder ein netzwerkfähiges Verbindungsmodul originär eine Netzwerkadresse aufweisen. Die Verwendung eines physischen Identifikationsmittels wie eines Aufdrucks dieser Informationen ermöglicht ein einfaches, maschinelles Einlesen des Identifikators, um den eingelesenen Identifikator in der Form von digitalen Daten empfangen zu können.

Anschließend kann gemäß einem weiteren Verfahrensschritt ein Zuordnen des empfangenen Identifikators zu wenigstens einer der Installationskennzeichnungen auf Basis der Artikelkennzeichnungen in der Installationsvorgabe vorgesehen sein. Mit anderen Worten kann anhand der Artikelkennzeichnungen bestimmt werden, welchen der Installationskennzeichnungen der empfangene Identifikator zugeordnet werden kann. Die Installationskennzeichnungen können ferner unterschiedliche Installationsorte angeben, für welche die Installationskennzeichnungen durch die Installationsvorgabe festgelegt sind.

Damit ermöglicht die Zuordnung, dass gemäß einem weiteren Verfahrensschritt wenigstens einer der Installationsorte für die Installation der zu installierenden Komponente auf Basis der Zuordnung des empfangenen Identifikators ermittelt wird. Dabei können auch mehrere der Installationskennzeichnungen für die Zuordnung und somit auch mehrere Installationsorte in Frage kommen, so dass ggf. eine Auswahl des gewünschten Installationsortes bzw. der gewünschten Installationskennzeichnung erfolgt.

Somit ist es durch die Erfindung nicht nur möglich, auf die sonst übliche und aufwendige nachträgliche Anbringung der Installationskennzeichnung an der Komponente zu verzichten, es kann sogar während der Installation eine dynamische Auswahl von geeigneten Installationsorten erfolgen.

Ein weiterer Vorteil kann im Rahmen der Erfindung erzielt werden, wenn der empfangene Identifikator eine Komponentenkennzeichnung für die zu installierende Komponente umfasst, wobei die Komponentenkennzeichnung eine Serienkennzeichnung und/oder eine Artikelkennzeichnung und/oder eine Herstellerkennzeichnung und/oder Netzwerkadresse umfasst, wobei vorzugsweise die Artikelkennzeichnung der Komponentenkennzeichnung und/oder die in der Installationsvorgabe festgelegten Artikelkennzeichnungen jeweils als Gattungskennzeichnungen der Komponenten ausgeführt sind. Im Gegensatz zu herkömmlichen Kennzeichnungen wie einer Betriebsmittelkennzeichnung kann dabei die Komponentenkennzeichnung ausschließlich bereits originär und damit generische Kennzeichnungen der Komponente umfassen. Damit kann der Aufwand und eine Fehleranfälligkeit wegen einer nachträglichen Anbringung solcher Kennzeichnungen verringert werden.

Weiter kann das Zuordnen des empfangenen Identifikators ferner umfassen: Feststellen einer gattungsgemäßen Eignung der zu installierenden Komponente zur Installation an wenigstens einem der Installationsorte. Hierzu kann die zu installierende Komponente wenigstens einer der für die Installationsorte festgelegten Artikelkennzeichnung in der Installationsvorgabe anhand der Artikelkennzeichnung der Komponentenkennzeichnung des empfangenen Identifikators zugeordnet werden. Bspw. wird hierzu einfach die Artikelkennzeichnung der Komponentenkennzeichnung mit den Artikelkennzeichnungen in der Installationsvorgabe verglichen. Die Artikelkennzeichnungen in der Installationsvorgabe sind ferner den Installationskennzeichnungen und somit den Installationsorten zugeordnet ("für den Installationsort festgelegt"), sodass auf diese Weise auch ein (geeigneter) Installationsort für die Komponente ermittelt werden kann. Dabei kann die Festlegung der Artikelkennzeichnungen und Installationskennzeichnungen für die Installationsorte so vorgesehen sein, dass die Artikelkennzeichnungen eine Eignung der durch die Artikelkennzeichnungen angegebenen Gattung zur Installation an diesen Installationsorten indizieren. Vorzugsweise kann daher die Eignung festgestellt werden, wenn die Artikelkennzeichnungen eine Übereinstimmung indizieren.

Als weiterer Schritt kann ein Auswählen wenigstens eines der Installationsorte, für welche die zu installierende Komponente zur Installation geeignet ist, vorgesehen sein. Da die Artikelkennzeichnungen lediglich die für die Installation geeignete Gattung und nicht eine spezifische Komponente angeben, können mehrere Installationsorte für die Installation der Komponente in Frage kommen. Nach der Auswahl kann ein Zuweisen der Komponentenkennzeichnung des empfangenen Identifikators zumindest teilweise, insbesondere zumindest der Serienkennzeichnung, zu der für den ausgewählten Installationsort festgelegten Installationskennzeichnung erfolgen. Auf diese Weise kann die Komponente für die Installation an den Installationsort spezifiziert und daher die für den ausgewählten Installationsort festgelegte Installationskennzeichnung erhalten.

Beispielsweise kann es vorgesehen sein, dass sowohl durch den empfangenen Identifikator als auch durch die Artikelkennzeichnungen in der Installationsvorgabe eine jeweilige Gattung der Komponenten spezifiziert ist, wobei zum Ermitteln des wenigstens einen Installationsortes für die zu installierende Komponente ferner vorgesehen sein kann: Feststellen einer gattungsgemäßen Eignung der zu installierenden Komponente zur Installation an wenigstens einem der Installationsorte, dadurch, dass die Gattung der zu installierenden Komponente mit den Gattungen gemäß der Artikelkennzeichnungen in der Installationsvorgabe verglichen wird, um die zu installierende Komponente zur Installation an wenigstens einem der Installationsorte als geeignet einzustufen. Dies ermöglicht eine dynamische und flexible Zuordnung der Komponenten, da auf eine vorgegebene Zuordnung zu festen Installationsorten verzichtet werden kann.

In einer weiteren Möglichkeit kann vorgesehen sein, dass der Identifikator eine zumindest eindeutige und bevorzugt eineindeutige Kennzeichnung für die zu installierende Komponente umfasst. Somit kann, obwohl eine nachträgliche Kennzeichnung mit herkömmlichen Kennzeichnungen nicht notwendig ist, dennoch wie bei den herkömmlichen Kennzeichnung die zu installierende Komponente eindeutig und bevorzugt eineindeutig von den weiteren Komponenten, insbesondere auch anderer Hersteller der Komponenten, unterschieden werden. Dieser Vorteil gegenüber bekannten Lösungen wird vorzugsweise dadurch erzielt, dass eine Kombination aus einer Serienkennzeichnung und Herstellerkennzeichnung oder eine Netzwerkadresse zur Kennzeichnung der Komponente vorgesehen ist und vorzugsweise eine komponentenseitige Installationskennzeichnung funktional bei der zu installierenden Komponente für die Installation ersetzt.

Es kann optional möglich sein, dass das Verfahren die weiteren nachfolgenden Schritte umfasst:
- Auswählen eines der ermittelten Installationsorte zur Installation der zu installierenden Komponente, vorzugsweise manuell durch einen Benutzer, bevorzugt über eine grafische Benutzeroberfläche,
- Ermitteln einer Serienkennzeichnung anhand des empfangenen Identifikators, wobei die Serienkennzeichnung eine zumindest eindeutige Kennzeichnung der zu installierenden Komponente bereitstellt,
- Zuweisen der ermittelten Serienkennzeichnung zu derjenigen Installationskennzeichnung, welche für den ausgewählten Installationsort festgelegt ist,
- Hinterlegen, vorzugsweise nicht-flüchtiges Speichern, der Zuweisung in der Installationsvorgabe, um die Installationsvorgabe zu aktualisieren,
- Bereitstellen der aktualisierten Installationsvorgabe für eine weitere Installation und/oder Wartung der Maschine.

Die aktualisierte Installationsvorgabe kann auf diese Weise zur weiteren Installation der Maschine dienen. Dabei kann ggf. auch zumindest teilautomatisiert auf die aktualisierte Installationsvorgabe zugegriffen werden, um die physische Installation der Maschine zumindest teilautomatisiert durchzuführen und/oder zu überprüfen, z. B. auf Korrektheit gegenüber der Installationsvorgabe zu prüfen. Die Serienkennzeichnung kann dazu ausgeführt sein, die Komponente und insbesondere ein Betriebsmittel eindeutig zu identifizieren und damit von anderen Komponenten bzw. Betriebsmittel zu unterscheiden. Jede der verwendeten Serienkennzeichnungen kann daher einzigartig sein, um Verwechslungen zu vermeiden. Bspw. können die Serienkennzeichnungen als Seriennummern mit einer Kombination von Zahlen und/oder Buchstaben ausgeführt sein.

Ferner ist es optional vorgesehen, dass das Verfahren den weiteren nachfolgenden Schritt umfasst:
- Initiieren einer Ausgabe einer Installationsinformation basierend auf dem Zuordnen des empfangenen Identifikators, wobei die Installationsinformation vorzugsweise eine Angabe des wenigstens einen ermittelten Installationsortes und vorzugsweise des wenigstens einen der Installationsorte umfasst, für welche die zu installierende Komponente zur Installation geeignet ist.

Dabei kann das Initiieren der Ausgabe zumindest einen der nachfolgenden Schritte umfassen:
- Initiieren einer Anzeige des wenigstens einen ermittelten Installationsortes auf einer Benutzeroberfläche eines Computers, wobei die Benutzeroberfläche einen digitalen Zwilling zumindest eines Teils der Maschine visualisiert, und vorzugsweise eine Topologie und/oder einen mechanischen und/oder einen elektrischen Anschlussplan zumindest des Teils der Maschine visualisiert,
- Initiieren einer Anzeige des wenigstens einen ermittelten Installationsortes mittels Virtueller und/oder Erweiterter Realität,
- Initiieren einer akustischen Ausgabe, insbesondere einer Sprachausgabe, der Installationsinformation,
- Initiieren einer grafischen Anzeige der Installationsinformation, vorzugsweise bei einer grafischen Benutzeroberfläche, bevorzugt im Zusammenhang mit einer Visualisierung der Maschine.

Ein weiterer Vorteil kann im Rahmen der Erfindung erzielt werden, wenn das Verfahren die weiteren nachfolgenden Schritte umfasst:
- Auswählen wenigstens eines oder genau eines der ermittelten Installationsorte, wobei nur ein Teil der ermittelten Installationsorte ausgewählt wird,
- Identifizieren wenigstens eines Installationsvorschlags für die Installation der zu installierenden Komponente auf Basis der ermittelten Installationsorte, wobei durch den wenigstens einen Installationsvorschlag der wenigstens eine oder der genau eine ausgewählte Installationsort angegeben werden, und
- Initiieren einer Ausgabe einer Installationsinformation basierend auf dem wenigstens einen identifizierten Installationsvorschlag.

Ferner kann es im Rahmen der Erfindung vorgesehen sein, dass die Installationsinformation eine Installationsanweisung zur Unterstützung eines Benutzers bei der Installation umfasst, und/oder dass das Initiieren der Ausgabe zumindest einen der nachfolgenden Schritte umfasst:
- Initiieren einer Anzeige des wenigstens einen ausgewählten Installationsorts für die zu installierende Komponente auf einer Benutzeroberfläche eines Computers, wobei die Benutzeroberfläche einen digitalen Zwilling zumindest eines Teils der Maschine visualisiert, und vorzugsweise eine Topologie und/oder einen mechanischen und/oder einen elektrischen Anschlussplan des Teils der Maschine visualisiert,
- Initiieren einer Anzeige des wenigstens einen ausgewählten Installationsorts der zu installierenden Komponente mittels Virtueller und/oder Erweiterter Realität,
- Initiieren einer Ausgabe der Installationsanweisung als eine Anweisung für den Benutzer, einen gewünschten Installationsort aus einer Liste der mehreren ausgewählten Installationsorte für die Installation zu verwenden und/oder die zu installierende Komponente an dem, vorzugsweise gewünschten, Installationsort zu montieren,
- Initiieren einer akustischen Ausgabe, insbesondere einer Sprachausgabe, der Installationsanweisung,
- Initiieren einer grafischen Anzeige der Installationsanweisung, vorzugsweise bei einer grafischen Benutzeroberfläche, bevorzugt im Zusammenhang mit einer Visualisierung der Maschine,
- Initiieren einer grafischen Anzeige einer Liste der mehreren ausgewählten Installationsorten basierend auf dem Installationsvorschlag.

Vorteilhafterweise kann bei der Erfindung vorgesehen sein, dass die Komponenten als elektrische Betriebsmittel der Maschine in der Form einer elektrischen Anlage ausgeführt sind, welche unterschiedlichen Gattungen zugeordnet sind, wobei die Komponenten gemäß einer ersten Gattung mehrere dezentral angeordnete Verbindungselemente, insbesondere Kabel, umfassen, und gemäß einer zweiten Gattung mehrere dezentral angeordnete Verbindungsmodule umfassen, wobei die Verbindungsmodule jeweils mehrere Verbindungsstellen zur elektrischen Verbindung mit den Verbindungselementen umfassen, um über die Verbindungselemente weitere Geräte der Maschine, insbesondere Sensoren und/oder Aktoren, anzusteuern.

Ferner kann eine Verschaltung der Komponenten und Geräte dezentral (in Bezug auf einen ansonsten zur zentralen Installation vorgesehenen Schaltschrank) über die Verbindungsmodule erfolgen.

Auch ist es möglich, dass der empfangene Identifikator eine Komponentenkennzeichnung für die zu installierende Komponente umfasst, wobei die Komponentenkennzeichnung abhängig von einer Gattung der zu installierenden Komponente unterschiedliche der folgenden Kennzeichnungen umfassen kann: eine eineindeutige Kennzeichnung, eine Serienkennzeichnung, eine Artikelkennzeichnung, eine Herstellerkennzeichnung, Netzwerkadresse, vorzugsweise eine MAC-Adresse, einen maschinenlesbaren Code, vorzugsweise QR-Code.

Es ist denkbar, dass der Identifikator eine Serienkennzeichnung, insbesondere eine Seriennummer, aufweist, um die zu installierende Komponente - vorzugsweise eineindeutig - für den Hersteller der Komponente zu kennzeichnen. Die Serienkennzeichnung kann dabei herstellerbezogen sein und somit die eineindeutige Kennzeichnung nur für den Hersteller gewährleisten. Weiter ist es möglich, dass der Identifikator eine Artikelkennzeichnung, vorzugsweise Artikelnummer, aufweist, um darüber die Gattung und/oder technische Eigenschaften der Komponente zu kennzeichnen. Die Artikelkennzeichnung kann darüber hinaus - vorzugsweise eineindeutig - die Komponente für den Hersteller kennzeichnen. Auch die Artikelkennzeichnung kann herstellerbezogen sein und somit die eineindeutige Kennzeichnung nur für den Hersteller der Komponente gewährleisten. Darüber hinaus kann der Identifikator eine Herstellerkennzeichnung aufweisen, welche den Hersteller der Komponente kennzeichnet. Aus der Kombination aus Artikelkennzeichnung und Herstellerkennzeichnung bzw. Serienkennzeichnung und Herstellerkennzeichnung kann sich zudem eine eineindeutige Kennzeichnung auch für verschiedene Hersteller ergeben. Damit ist es möglich, auch Komponenten von verschiedenen Herstellern anhand des Identifikators eindeutig bzw. eineindeutig zu identifizieren. Auch ist des denkbar, dass über die Artikelnummer technische Eigenschaften der Komponente ermittelt werden und dann automatisiert die Eignung einer Komponente wie eines Geräts eines anderen Herstellers mit anderer Artikelnummer geprüft wird.

Darüber hinaus ist es möglich, dass das Verfahren die folgenden weiteren Schritte umfasst:
- Verifizieren eines ausgewählten Installationsorts der zu installierenden Komponente auf Basis des empfangenen Identifikators und der Installationsvorgabe, insbesondere, um festzustellen, ob ein Benutzer die Installationsinformation in der Form einer Installationsanweisung für den ausgewählten Installationsort korrekt umgesetzt hat, wobei bevorzugt in Abhängigkeit von dem Verifizieren eine Kennzeichnung für die Installationsvorgabe hinterlegt wird, und besonders bevorzugt im Falle einer positiven Verifikation der nachfolgende Schritt durchgeführt wird:
- Hinterlegen der Kennzeichnung des Installationsorts als korrekt ausgewählter Installationsort in der Installationsvorgabe;
wobei vorteilhafterweise im Falle einer negativen Verifikation zumindest einer der nachfolgenden Schritte durchgeführt wird:
- Hinterlegen einer Kennzeichnung des Installationsorts als geänderter ausgewählter Installationsort in der Installationsvorgabe, bevorzugt basierend auf einem vom Benutzer erfassten Installationsparameter, insbesondere einem Anlass oder Grund der Änderung, wobei vorzugsweise eine Angabe zum Anlass oder Grund der Änderung mit hinterlegt wird; und bevorzugt:
- Initiieren einer Korrektur des ausgewählten Installationsorts gemäß der Installationsvorgabe.

Diese Schritte können dabei zumindest teilweise automatisch durchgeführt werden, um eine möglichst sichere und fehlerfreie Installation zu gewährleisten.

Darüber hinaus ist es möglich, dass die Installationsvorgabe eine vordefinierte Spezifikation über einen modularen und/oder dezentralen Aufbau der Maschine, insbesondere der elektrischen Anlage, vorzugsweise einen elektrischen und/oder mechanischen und/oder Netzwerk-Anschlussplan, umfasst.

Weiter ist es denkbar, dass die zu installierende Komponente ein Verbindungselement, insbesondere ein Kabel, und/oder ein Verbindungsmodul zur dezentralen Verbindung von Sensoren und/oder Aktoren über Verbindungselemente mit einer Steuerungsvorrichtung ist.

Außerdem kann es im Rahmen der Erfindung von Vorteil sein, dass der empfangene Identifikator und/oder vorzugsweise eine Komponentenkennzeichnung des empfangenen Identifikators im Gegensatz zur Installationskennzeichnung eine originäre Kennzeichnung der zu installierenden Komponente ist, wobei vorzugsweise der Identifikator und insbesondere die Komponentenkennzeichnung zum Herstellungszeitpunkt und/oder zum Konfektionierungszeitpunkt an die zu installierende Komponente angebracht worden ist, insbesondere aufgedruckt und/oder durch Lasergravur und/oder Laserbeschriftung aufgebracht und/oder geklebt worden ist, wobei der Identifikator bevorzugt einen Code, insbesondere Strichcode oder QR-Code, umfasst, um für das Empfangen durch ein Lesegerät erfasst zu werden.

Ebenfalls Gegenstand der Erfindung ist ein System, umfassend zumindest:
- eine oder mehrere Komponenten (jeweils) mit einem Identifikator, wobei der Identifikator dazu ausgeführt ist, die Komponente zumindest eindeutig sowie gattungsgemäß zu kennzeichnen,
- ein Lesegerät zum Erfassen des Identifikators,
- eine (insbesondere erfindungsgemäße) Vorrichtung zur Datenverarbeitung, welche dazu ausgeführt ist, den erfassten Identifikator zu empfangen und zu wenigstens einer Installationskennzeichnung auf Basis von gattungsgemäßen Kennzeichnungen, insbesondere einer Artikelkennzeichnung, in einer Installationsvorgabe für eine computer-gestützte, dezentrale Installation der elektrischen Komponente bei einer Maschine zuzuordnen.

Damit bringt das erfindungsgemäße System die gleichen Vorteile mit sich, wie sie ausführlich mit Bezug auf ein erfindungsgemäßes Verfahren beschrieben worden sind. Zudem kann das System geeignet sein, die Schritte eines erfindungsgemäßen Verfahrens auszuführen.

Ebenfalls Gegenstand der Erfindung ist ein Computerprogramm, umfassend Befehle, die bei der Ausführung des Computerprogramms durch einen Computer diesen veranlassen, die Schritte eines erfindungsgemäßen Verfahrens auszuführen. Zudem kann eine Vorrichtung zur Datenverarbeitung Gegenstand der Erfindung sein, umfassend Mittel zur Ausführung der Schritte eines erfindungsgemäßen Verfahrens.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: Eine zentrale Verschaltung bei einer Maschine mittels eines Schaltschranks.
- Fig. 2: Eine dezentrale Verschaltung gemäß Ausführungsbeispielen der Erfindung.
- Fig. 3: Eine schematische Darstellung von Ausführungsbeispielen der Erfindung.
- Fig. 4: Eine schematische Visualisierung von Verfahrensschritten.

In den nachfolgenden Figuren werden für die gleichen technischen Merkmale auch von unterschiedlichen Ausführungsbeispielen die identischen Bezugszeichen verwendet.

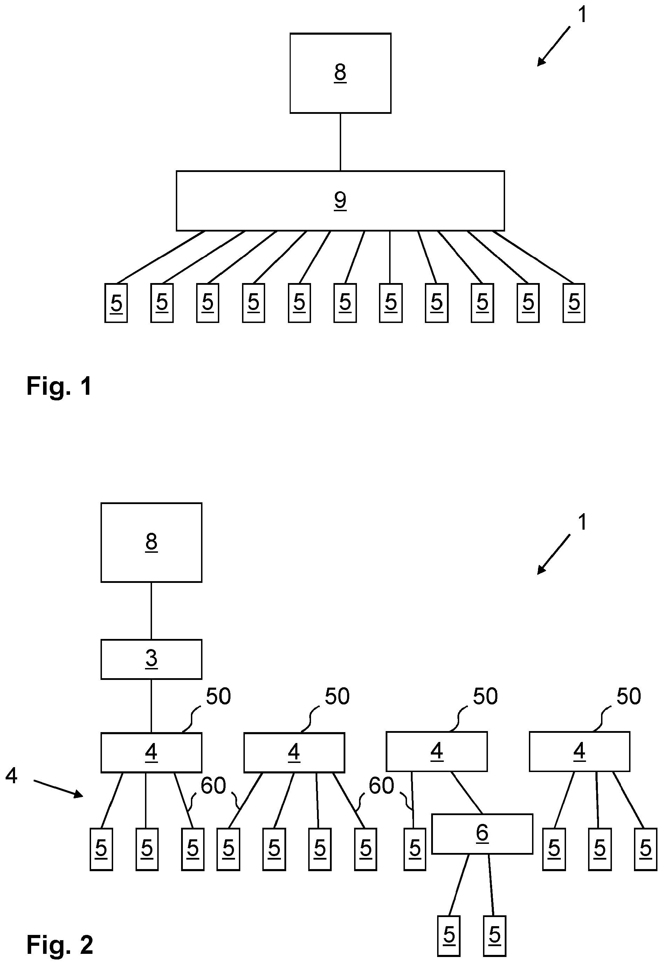

Das Planen, Installieren und Einrichten von Maschinen sowie elektronischer Automatisierungstechnik ist eine komplexe Aufgabe. Dies gilt für zentralisierte Schaltschrank-Systeme (s. Fig. 1) ebenso, wie für dezentralisierte Systeme (s. Fig. 2), in denen Steuerungsmodule direkt an den Anlagen angebracht werden. Die entsprechenden Prozesse werden von unterschiedlichen Personen, wie Anlagen-Planer, Elektro-Planer, Installateur, Anlagenprogrammierer etc. durchgeführt. Eine Besonderheit bei dezentralen Systemen ist die Verteilung der Module an verschiedenen Stellen einer Maschine im Vergleich zu den zentralisierten Schaltschrank-Systemen.

In Fig. 1 ist schematisch eine zentrale Verschaltung mittels eines Schaltschranks 9 dargestellt, um diese einer dezentralen Verschaltung mittels räumlich dezentral angeordneten, elektrischen Komponenten 4 einer Maschine 1 in Fig. 2 gegenüberzustellen. Die Komponenten 4 können gemäß Ausführungsbeispielen der Erfindung verschiedene Gattungen wie Verbindungselemente 60, also bspw. Kabel, und Verbindungsmodule 50 umfassen. Anstelle einer Verbindung sämtlicher Geräte 5 wie Sensoren und Aktoren unmittelbar mit dem Schaltschrank 9 - wie in Fig. 1 dargestellt - können bei der dezentralen Verschaltung in Fig. 2 mehrere Komponenten 4, also insbesondere die Verbindungsmodule 50, zur Verschaltung der Geräte 5 im Feld eingesetzt werden. Die Verbindungsmodule 50 ermöglichen, wie der Schaltschrank 9, eine Kopplung der Geräte 5 mit einer Steuerungsvorrichtung 8 wie einer SPS (d. h. einer Speicherprogrammierbaren Steuerung). Allerdings können die Verbindungsmodule 50 dezentral und verteilt in der Nähe der Geräte 5 vorgesehen sein. Mit anderen Worten wird ein zentraler Schaltschrank 9 zumindest teilweise auf mehrere dezentrale Verbindungsmodule 50 aufgeteilt. Die Verbindungsmodule 50 verschalten somit jeweils die Geräte 5 nur teilweise, wobei die Verbindungsmodule 50 zusammen oder beispielsweise ein und/oder mehrere Verbindungsmodule 50 über jeweils einen und/oder mehrere Hubs 6 die gesamte Verschaltung vornehmen können. Um die Konfiguration und/oder Ansteuerung der Verbindungsmodule 50 zentral zu ermöglichen, kann ein Controllermodul 3 (auch Mastermodul 3 bezeichnet) mehreren der einzelnen Verbindungsmodulen 50 vorgeschaltet sein. Das Controllermodul 3 kann dann über eine Datenverbindung und vorzugsweise ein Datennetzwerk die damit verbundenen Verbindungsmodule 50 konfigurieren. Die damit verbundenen Verbindungsmodule 50 können entsprechend als Peripherie-Verbindungsmodule 50 aufgefasst werden. Ebenfalls ist es möglich, dass eine weitere Untergliederung der Verschaltung mittels wenigstens eines Hubs 6 erfolgt.

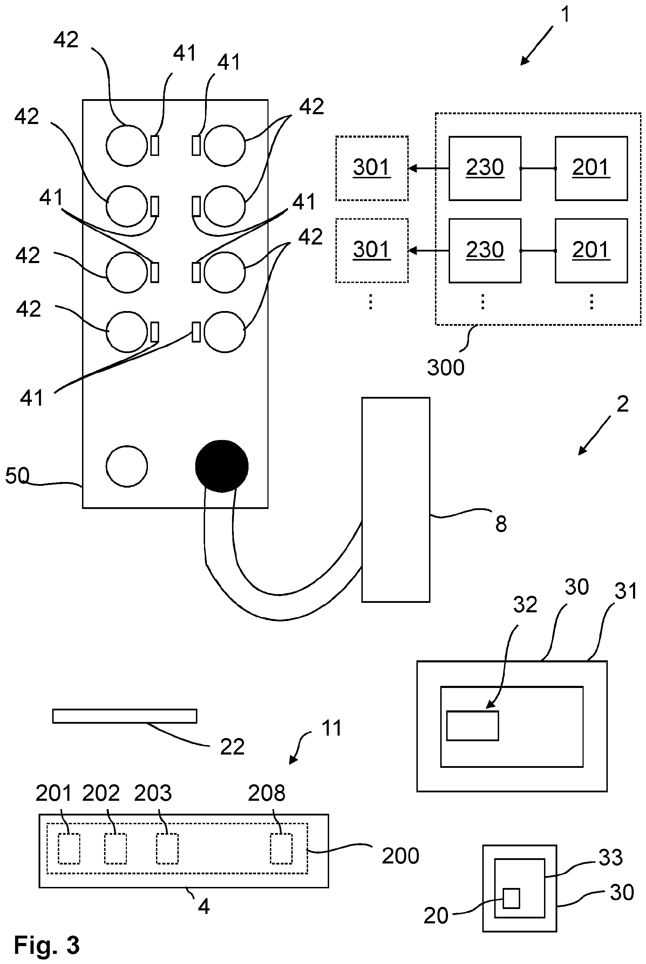

In Fig. 3 sind Teile eines Systems 2 gemäß Ausführungsbeispielen der Erfindung dargestellt. Das System 2 kann hierbei für eine computer-gestützte Installation von räumlich dezentral angeordneten elektrischen Komponenten 4 einer Maschine 1 vorgesehen sein. Die Komponenten 4 können somit zumindest einen Teil der Betriebsmittel umfassen, welche für die Installation und damit zur Bereitstellung der Funktion der Maschine 1 erforderlich sind. Um die Installation zu verbessern, können die Komponenten 4 jeweils einen Identifikator 11 umfassen, welcher dazu ausgeführt ist, die Komponente 4 zumindest eindeutig und/oder gattungsgemäß zu kennzeichnen. Hierzu kann der Identifikator 11 eine Komponentenkennzeichnung 200 aufweisen, welche aus einer Kombination oder Zusammenstellung mehrerer einzelner Kennzeichen wie einer Artikelkennzeichnung 201 und/oder einer Serienkennzeichnung 202 und/oder einer Herstellerkennzeichnung 203 und/oder einer Netzwerkadresse 208 resultieren kann. Auch ist es möglich, dass die Komponentenkennzeichnung 200 nur eine dieser Kennzeichen aufweist, z. B. die Netzwerkadresse 208. Darüber hinaus kann bei dem System 2 ein Lesegerät 22 zum Erfassen des Identifikators 11 vorgesehen sein. Das Lesegerät 22 kann dabei als mobiles, tragbares Gerät ausgeführt sein, welches ein Benutzer direkt an der Komponente 4 wie einem Kabel 60 verwenden kann, um den Identifikator 11 zu erfassen.

Gemäß Ausführungsbeispielen der Erfindung kann eine Vorrichtung 30 bei dem System 2 zur Datenverarbeitung vorgesehen sein. Die Vorrichtung 30, konkret ein Computerprogramm 20 in einem Datenspeicher 33 der Vorrichtung 30, kann den erfassten Identifikator 11 empfangen und zu wenigstens einer Installationskennzeichnung 230 auf Basis von gattungsgemäßen Kennzeichnungen 201 in einer Installationsvorgabe 300 für die computer-gestützte, dezentrale Installation der elektrischen Komponenten 4 bei einer Maschine 1 zuzuordnen.

Die Installationsvorgabe 300 kann als ein elektrischer Schaltplan ausgeführt und digital bereitgestellt sein. Hierzu ist die Installationsvorgabe 300 zumindest teilweise in dem Datenspeicher 33 der Vorrichtung 30 und/oder in einem externen Datenspeicher (z. B. einer cloudbasierten Datenbank) nicht-flüchtig hinterlegt. Hierzu ist die Installationsvorgabe 300 bspw. als ein digitaler elektrischer Schaltplan 300 ausgeführt, welcher insbesondere einen (digitalisierten) Anschlussplan aufweist. In Fig. 3 ist die Installationsvorgabe 300 schematisch derart dargestellt, dass mehrere Installationskennzeichnungen 230, insbesondere jeweils in der Form einer Betriebsmittelkennzeichnung, und Artikelkennzeichnungen 201, insbesondere jeweils in der Form einer Artikelnummer, einander zugeordnet sowie für mehrere Installationsorte 301 festgelegt sind. Die Installationsorte 301 sind bspw. die für die Installation vorgesehenen Anschlüsse der Maschine 1 und umfassen bspw. die in Fig. 3 dargestellten Verbindungsstellen 42 der Verbindungsmodule 50. Die Komponenten 4 können Verbindungselemente 60 wie Kabel oder auch die Verbindungsmodule 50 umfassen, welche je nach Gattung gemäß dem Anschlussplan an einem oder mehrere der Anschlüsse der Maschine 1 angeschlossen werden können. Die Artikelkennzeichnung 201 kann die Gattung spezifizieren und die Installationskennzeichnung 230 kann eindeutig dem Installationsort 301, also bspw. einem der Verbindungsstellen 42, zugeordnet sein. Somit ist es möglich, anhand der Zuordnung der Installationskennzeichnungen 230 zu den Artikelkennzeichnungen 201 in der Installationsvorgabe 300 zu erkennen, an welchen Installationsorten 301 eine bestimmte Komponente 4 aufgrund ihrer Gattung angeschlossen werden kann. Somit muss eine spezifische Komponente 4, z. B. ein konkretes Kabel eines bestimmten Typs und mit einer bestimmten Seriennummer, nicht von vornherein in der Installationsvorgabe 300 einem bestimmten Installationsort 301 zugeordnet werden - es reicht aus, diese Zuordnung erst während der Installation flexibel vorzunehmen. Sobald die Zuordnung vorgenommen wird, z. B. ausgelöst durch das Einscannen des Identifikators 11 (damit die Vorrichtung 30 den Identifikator 11 empfangen kann) und nach der Auswahl eines der daraufhin ermittelten Installationsorte 301, kann die Zuordnung fest in die Installationsvorgabe 300 hinterlegt werden, um die Installation entsprechend zu dokumentieren.

Es ist denkbar, dass anschließend noch automatisiert überprüft wird, ob die Komponente 4 tatsächlich an den ausgewählten Installationsort 301 angeschlossen worden ist. Hierzu kann bspw. die Komponentenkennzeichnung 200 der angeschlossenen Komponente 4 ermittelt und mit der hinterlegten Zuordnung in der Installationsvorgabe 300 verglichen werden.

Ferner ist in Fig. 3 ein Computerprogramm 20 gemäß Ausführungsbeispielen der Erfindung dargestellt, welches Befehle umfasst, die bei der Ausführung des Programms durch einen Computer 30 diesen veranlassen, die Schritte des Verfahrens 100 gemäß Ausführungsbeispielen der Erfindung auszuführen.

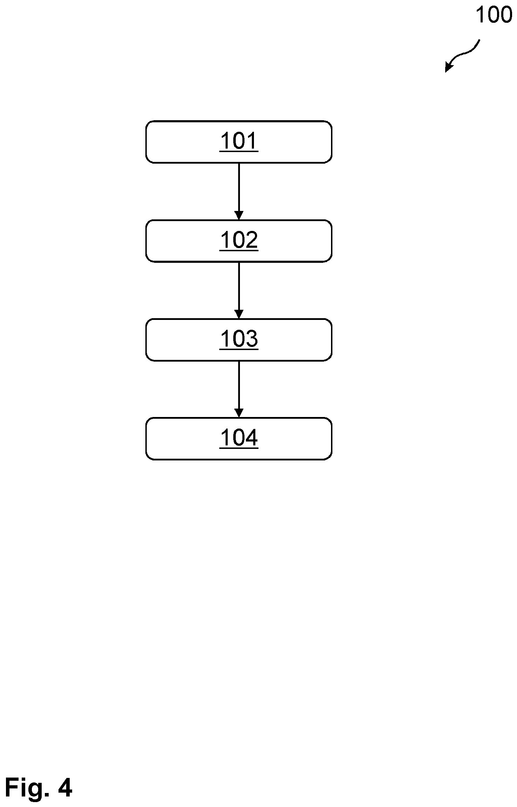

In Fig. 4 sind Verfahrensschritte des Verfahrens 100 visualisiert. Gemäß einem ersten Verfahrensschritt 101 kann es vorgesehen sein, dass zunächst die Installationsvorgabe 300 bereitgestellt wird. Die Installationsvorgabe 300 dient der Installation, da sie die Komponenten 4 zu einem oder mehreren Installationsorten 301 der Maschine 1 zuordnet. Mit anderen Worten gibt die Installationsvorgabe 300 an, an welchen Installationsorten 301 die Komponenten 4 gemäß einer vordefinierten Planung installiert werden sollen. Diese Zuordnung kann während der Installation schrittweise für alle Komponenten 4 spezifiziert werden, zuvor jedoch nur hinsichtlich der erforderlichen Gattung der Komponenten 4 in der Installationsvorgabe 300 vorgegebenen sein. Daher kann die Installationsvorgabe 300 für den einen oder die mehreren Installationsorte 301 jeweils eine Installationskennzeichnung 230, insbesondere Betriebsmittelkennzeichnung, und Artikelkennzeichnung, insbesondere Artikelnummer, vorzugsweise als eine eindeutige Kennzeichnung festlegen. Die Artikelkennzeichnung 201 kann hierbei die erforderliche Gattung der Komponente 4 für einen der Installationsorte 301 angegeben und die Installationskennzeichnung 230 eindeutig die noch zu spezifizierende Komponente 4 gemäß der erforderlichen Gattung diesem Installationsort 301 zuweisen.

Um die o.g. Spezifizierung der Komponente 4 vorzunehmen, kann zunächst gemäß einem zweiten Verfahrensschritt 102 der Identifikator 11 einer zu installierenden Komponente 4 der Komponenten 4 empfangen und gemäß einem dritten Verfahrensschritt 103 zu wenigstens einer der Installationskennzeichnungen 230 auf Basis der Artikelkennzeichnungen 201 in der Installationsvorgabe 300 zugeordnet werden. Anschließend kann gemäß einem vierten Verfahrensschritt 104 wenigstens einer der Installationsorte 301 für die Installation der zu installierenden Komponente 4 auf Basis der Zuordnung 103 des empfangenen Identifikators 11 ermittelt werden. Mit anderen Worten: Es können diejenigen Installationsorte 301 für die Installation der zu installierenden Komponente 4 und damit als für die Installation geeignete Installationsorte 301 ermittelt werden, für welche in der Installationsvorgabe 300 eine solche Artikelkennzeichnung 201 festgelegt ist, die auf die Gattung der zu installierenden Komponente 4 hinweist. Für einen dieser ermittelten Installationsorte 301 und der für diesen Installationsort 301 festgelegte Installationskennzeichnung 230 kann anschließend die Komponente 4 spezifiziert werden, welche an diesem Installationsort 301 installiert wird. Die Installation an diesem Installationsort 301 kann ferner dokumentiert werden, z. B. durch ein Hinterlegen zumindest eines Teils des Identifikators 11 in der Installationsvorlage 300 zugewiesen zu der für den ausgewählten Installationsort 301 festgelegten Installationskennzeichnung 230.

Um die Feststellung zu ermöglichen, für welche Installationsorte 301 in der Installationsvorgabe 300 eine solche Artikelkennzeichnung 201 festgelegt ist, die auf die Gattung der zu installierenden Komponente 4 hinweist, kann der empfangene Identifikator 11 genutzt werden. Hierzu kann der empfangene Identifikator 11 eine Komponentenkennzeichnung 200 für die zu installierende Komponente 4 umfassen, wobei die Komponentenkennzeichnung 200 vorzugsweise eine Serienkennzeichnung 202 und/oder eine Artikelkennzeichnung 201 und/oder eine Herstellerkennzeichnung 203 und/oder Netzwerkadresse 208 umfasst (s. Fig. 3). Dies ermöglicht ein Feststellen einer gattungsgemäßen Eignung der zu installierenden Komponente 4 zur Installation an wenigstens einem der Installationsorte 301. Hierzu kann die zu installierende Komponente 4 wenigstens einer der für die Installationsorte 301 festgelegten Artikelkennzeichnung 201 in der Installationsvorgabe 300 anhand der Artikelkennzeichnung 201 der Komponentenkennzeichnung 200 des empfangenen Identifikators 11 zugeordnet werden, bspw. durch die Feststellung, mit welchen der Artikelkennzeichnungen 201 in der Installationsvorgabe 300 die Artikelkennzeichnung 201 der Komponentenkennzeichnung 200 übereinstimmt. Die Installationsorte 301, für welche diese übereinstimmenden Artikelkennzeichnungen 201 festgelegt sind, werden auf diese Weise ermittelt und können für die Installation ausgewählt werden. Um die Installation an den ausgewählten Installationsort 301 zu dokumentieren, kann anschließend ein Zuweisen der Komponentenkennzeichnung 200 des empfangenen Identifikators 11 zumindest teilweise, insbesondere zumindest die Serienkennzeichnung 202, zu der für den ausgewählten Installationsort 301 festgelegten Installationskennzeichnung 230 vorgesehen sein. Die Auswahl kann manuell durch einen Benutzer erfolgen, z. B. über eine grafische Benutzeroberfläche 32 (s. Fig. 3). Die nach der Dokumentation aktualisierte Installationsvorgabe 300 kann anschließend für die weitere Durchführung der Installation der Maschine 1 verwendet werden und sukzessive bei jeder Installation einer der Komponenten 4 erneut aktualisiert werden.

Das Verfahren 100 gemäß Ausführungsbeispielen der Erfindung ermöglicht nicht nur eine dynamische Spezifizierung der Komponenten 4 zu bestimmten Installationsorten 301, sondern auch eine weitergehende Unterstützung eines Benutzers (also bspw. Installateur) während der Installation. So kann gemäß Fig. 3 bspw. eine Installationsinformation basierend auf dem Zuordnen 103 des empfangenen Identifikators ausgegeben werden, insbesondere auf einer grafischen Benutzeroberfläche 32 und/oder über Anzeigeelemente 41 der Verbindungsmodule 50. Die Installationsinformation ermöglicht eine Angabe des wenigstens einen ermittelten Installationsortes 301 und vorzugsweise des wenigstens einen der Installationsorte 301, für welche die zu installierende Komponente 4 zur Installation geeignet ist. Die Installationsorte 301 umfassen bspw. die Anschlussstellen 42, denen jeweils eines der Anzeigeelemente 41 zugeordnet sein kann. Die Zuordnung kann durch die entsprechende räumliche Anordnung der Anzeigeelemente 41 in der Nähe zu den jeweils zugeordneten Anschlussstellen 42 am Verbindungsmodul 50 für einen Benutzer verdeutlicht werden, wie es in Fig. 3 beispielhaft zu sehen ist. Für die Ausgabe der Installationsinformation können z. B. die Anzeigeelemente 41 aktiviert werden, um die zugehörigen Anschlussstellen 42 anzuzeigen, die den ermittelten Installationsorten 301 entsprechen. Der Benutzer kann anschließend die Auswahl treffen, was ggf. wieder durch die Anzeigeelemente 41 visuell bestätigt werden kann.

Die Auswahl des Installationsortes 301 kann ferner auch automatisch erfolgen, z. B. nach vorgegebenen Kriterien, um eine beste Eignung zu ermitteln. Der ausgewählte Installationsort 301 kann dann als Installationsvorschlag ausgegeben werden.

Für die Anzeige des wenigstens einen ermittelten Installationsortes 301 auf der Benutzeroberfläche 32 eines Computers 31 kann es vorgesehen sein, dass die Benutzeroberfläche 32 einen digitalen Zwilling zumindest eines Teils der Maschine 1 visualisiert, und vorzugsweise eine Topologie und/oder einen mechanischen und/oder einen elektrischen Anschlussplan zumindest des Teils der Maschine 1 visualisiert. Somit ist es möglich, visuell eine Art Karte mit den Installationsorten 301 anzugeben, auf denen die ermittelten Installationsorte 301 hervorgehoben werden. In ähnlicher Weise können die ermittelten Installationsorte 301 mittels Virtueller und/oder Erweiterter Realität angezeigt oder über eine akustische Ausgabe kommuniziert werden.

Gemäß Fig. 3 kann der empfangene Identifikator 11 und/oder vorzugsweise eine Komponentenkennzeichnung 200 des empfangenen Identifikators 11 im Gegensatz zur Installationskennzeichnung 230 eine originäre Kennzeichnung der zu installierenden Komponente 4 sein. Damit ist insbesondere gemeint, dass der Identifikator 11 nicht nachträglich anhand einer Installationsvorgabe 300 generiert werden muss. Im Gegenteil kann der Identifikator 11 für unterschiedliche Installationen und Installationsvorgaben 300 immer gleich sein, insbesondere, da er für die konkrete Komponente 4 eineindeutig ist. Bspw. kann der Identifikator 11 zum Herstellungszeitpunkt und/oder zum Konfektionierungszeitpunkt an die zu installierende Komponente 4 angebracht worden sein, insbesondere aufgedruckt und/oder durch Lasergravur und/oder Laserbeschriftung, wobei der Identifikator 11 einen Code, insbesondere Strichcode oder QR-Code, umfassen kann.

Das Verfahren 100 kann wenigstens eine der folgenden Unterstützungsmöglichkeiten für eine Installation bereitstellen:
- Unterstützung des Benutzers bei der Installation, insbesondere Verkabelung,
- Unterstützung des Benutzers bei der Dokumentation der Installation,
- Unterstützung des Benutzers beim Testing/automatisiertes Testing,
- Unterstützung des Benutzers bei der Demontage,
- Unterstützung des Engineerings bei der Planung,
- Unterstützung des SPS-Programmierers.

Um Fehler in der Dokumentation der Installation zu vermeiden, die beim manuellen Eintragen der Informationen entstehen können, kann die bereits beschriebene automatisierte Hinterlegung vorteilhaft sein. Dazu werden bspw. in den unterschiedlichen Dokumenten der Installationsvorgabe, wie beispielsweise dem Schaltplan oder dem Anschlussplan, sämtliche Informationen an der richtigen Stelle abgelegt. Die den jeweiligen Schritt ausführende Person muss die Eintragungen dann z. B. nur noch quittieren.

Zu den relevanten Informationen, welche die Installationsdokumentation umfassen kann, zählen beispielsweise:
- Welches Bauteil wurde verwendet (eindeutige, vorzugsweise eineindeutige Kennung)?
- An welcher Maschine und an welcher Stelle der Maschine wurde das konkrete Bauteil angebracht?
- Von wem wurde es wann angeschlossen?
- An welchem Port bzw. an welcher Anschlussstelle wurde das Kabel angeschlossen?
- Wie wurde das Kabel angeschlossen?
- Wurde das Bauteil ordnungsgemäß angeschlossen?
- Gab es Abweichungen zum Plan?

Die genannten Bauteile können hierbei z. B. die Komponenten 4 und/oder auch weitere Bauelemente der Maschine 1 sein. Durch die Installationsdokumentation kann z. B. wenigstens einer der folgenden Informationen dokumentiert werden: Arbeitsschritte des Benutzers mit Zusatzinformationen zu den Arbeitsschritten wie eine Bearbeitungsdauer, an welcher Maschine wird gearbeitet, welcher Benutzer, beispielsweise welcher Installateur oder Monteur, hat wann die Tätigkeiten durchgeführt, welches Bauteil ist verdrahtet und/ oder verkabelt worden, ist der Montageschritt abgeschlossen, welcher Port/welche Anschlussstelle wurde verwendet, existieren offene Kabel und was sind die Eigenschaften des offenen Kabels, z.B. Länge, Umgebungsparameter, z.B. Temperatur, Luftfeuchtigkeit, aktueller Projektstand, Schutzklasse, z.B. IP67, auch kann der Benutzer, insbesondere Werker, bei Planabweichungen den Grund der Planabweichung eingeben. Die Installationsdokumentation kann bspw. in einer Datenbank hinterlegt werden. Ein Benutzer kann ggf. mit physischen Handlungen (Tastendruck, Bildschirm, Doppelklick), die Dokumentation auslösen.

Ferner kann eine Auswerteeinheit vorgesehen sein, welche die dokumentierten Informationen, vorzugsweise die Bearbeitungsdauern des Benutzers zu den jeweiligen Arbeitsschritten, auswertet. Hierzu kann auch eine Methode einer künstlichen Intelligenz verwendet werden, welche bspw. die Ergebnisse der Auswerteeinheit optimiert. Die Ergebnisse zeigen dem Benutzer Optimierungspotenziale auf, um zukünftig eine Maschine effizienter zu gestalten, Komponenten 4 oder Baugruppen zu optimieren und Auf- und Abbauabläufe zu verbessern. Ferner werden die Kommentare bei Planabweichungen berücksichtigt.

Dabei ist es auch möglich, dass die Dokumentation mit Komponenten 4 funktioniert, welche nicht vorkonfiguriert oder an einer SPS angeschlossen sind. Dadurch werden Fehler vermieden, die durch die Verwendung äußerlich baugleicher, aber unterschiedlich konfigurierter Module entstehen können. Durch die mögliche Kommunikationsfähigkeit der Verbindungsmodule 50 und durch die Integration sämtlicher relevanter Informationen kann das System auch dazu verwendet werden, den Benutzer bei der Installation der Automatisierungstechnik anzuleiten. Das systematische Sammeln und Dokumentieren aller relevanten Informationen, beispielsweise die verwendeten Komponenten, die Ausführung von Installations- und Wartungsaufgaben oder eingetretene Problemfälle, führen ferner zu gesichertem Wissen über den gegenwärtigen Systemzustand. Durch das automatisierte Erheben und Zuordnen dieser Informationen wird der Prozess deutlich beschleunigt und menschliche Installateure werden von der Dokumentationsaufgabe entlastet. Durch das automatisierte Erheben und Speichern von zu dokumentierenden Informationen kann das Risiko fehlender und/oder falscher Dokumentationen deutlich reduziert werden.

Das in Fig. 3 dargestellte System 2 gemäß Ausführungsbeispielen der Erfindung kann ferner wenigstens eine Informationsschnittstelle aufweisen, um die Verfahrensschritte eines Verfahrens 100 bereitstellen zu können. Die wenigstens eine Informationsschnittstelle kann wenigstens eine der nachfolgenden Informationsschnittstellen zur Übermittlung von Informationen umfassen:
- Zwischen dem System 2 und dem Benutzer, insbesondere einen Werker und/oder einen Planer und/oder einen Programmierer, bspw. zur Übermittlung von Arbeitsanweisungen und/oder Projektständen und/oder zur Optimierung der Planung,
- Zwischen dem Benutzer und dem System 2, z. B. zur Übermittlung von Quittierungen der ausgeführten Arbeitsschritte und/oder Kommentare zu den ausgeführten Arbeitsschritten,
- Zwischen dem System 2 und den Komponenten 4,
- Zwischen dem System 2 über eine Komponente 4 zu einem oder mehreren Geräten 5 wie Aktoren und/oder Sensoren,
- Zwischen dem System 2 über eine Komponente 4 zu einem Hub 6.

Eine Übermittlung der Informationen kann als ein bidirektionaler Informationstransfer zwischen dem System 2 und den Komponenten 4, insbesondere Verbindungsmodulen 50, ausgeführt sein. Dieser kann durchgeführt werden, ohne dass die einzelnen Komponenten 4 an ein Steuerungssystem der Maschine 1 (SPS 8) angeschlossen und/oder für ihre zukünftige Aufgaben in der Maschine 1 vorkonfiguriert sind.

Obwohl einige Aspekte im Zusammenhang mit einer Vorrichtung beschrieben wurden, ist es klar, dass diese Aspekte auch eine Beschreibung des entsprechenden Verfahrens darstellen, wobei ein Element oder eine Vorrichtung einem Verfahrensschritt oder einem Merkmal eines Verfahrensschritts entspricht. Analog dazu stellen Aspekte, die im Zusammenhang mit einem Verfahrensschritt beschrieben werden, auch eine Beschreibung eines entsprechenden Blocks oder Elements oder Merkmals eines entsprechenden Geräts dar.

Ausführungsformen der Erfindung können auf einem Computersystem implementiert werden. Bei dem Computersystem kann es sich um ein lokales Computergerät (z. B. Personalcomputer, Laptop, Tablet-Computer oder Mobiltelefon) mit einem oder mehreren Prozessoren und einem oder mehreren Speichergeräten handeln oder um ein verteiltes Computersystem (z. B. ein Cloud-Computersystem mit einem oder mehreren Prozessoren und einem oder mehreren Speichergeräten, die an verschiedenen Orten verteilt sind, z. B. bei einem lokalen Client und/oder einer oder mehreren entfernten Serverfarmen und/oder Datenzentren). Das Computersystem kann jede beliebige Schaltung oder Kombination von Schaltungen umfassen. In einer Ausführungsform kann das Computersystem einen oder mehrere Prozessoren beliebiger Art umfassen. Der hier verwendete Begriff "Prozessor" kann jede Art von Rechenschaltung bezeichnen, z. B. einen Mikroprozessor, einen Mikrocontroller, einen CISC-Mikroprozessor (Complex Instruction Set Computing), einen RISC-Mikroprozessor (Reduced Instruction Set Computing), einen VLlW-Mikroprozessor (Very Long Instruction Word), einen Grafikprozessor, einen digitalen Signalprozessor (DSP), einen Mehrkernprozessor, ein FPGA (Field Programmable Gate Array) oder jede andere Art von Prozessor oder Verarbeitungsschaltung. Andere Arten von Schaltkreisen, die im Computersystem enthalten sein können, können ein kundenspezifischer Schaltkreis, ein anwendungsspezifischer integrierter Schaltkreis (ASIC) oder ähnliches sein, wie z. B. ein oder mehrere Schaltkreise (z. B. ein Kommunikationsschaltkreis) zur Verwendung in drahtlosen Geräten wie Mobiltelefonen, Tablet-Computern, Laptop-Computern, Zwei-Wege-Funkgeräten und ähnlichen elektronischen Systemen. Das Computersystem kann eine oder mehrere Speichervorrichtungen enthalten, die ein oder mehrere für die jeweilige Anwendung geeignete Speicherelemente umfassen können, wie z. B. einen Hauptspeicher in Form eines Direktzugriffsspeichers (RAM), eine oder mehrere Festplatten und/oder ein oder mehrere Laufwerke, die Wechseldatenträger wie Compact Disks (CD), Flash-Speicherkarten, digitale Videodisks (DVD) und dergleichen verarbeiten. Das Computersystem kann auch ein Anzeigegerät, einen oder mehrere Lautsprecher und eine Tastatur und/oder ein Steuergerät enthalten, das eine Maus, einen Trackball, einen Touchscreen, ein Spracherkennungsgerät oder ein anderes Gerät umfassen kann, das es einem Systembenutzer ermöglicht, Informationen in das Computersystem einzugeben und Informationen von ihm zu empfangen.

Einige oder alle Verfahrensschritte können von einem Hardware-Gerät (oder unter Verwendung eines solchen) ausgeführt werden, wie z. B. einem Prozessor, einem Mikroprozessor, einem programmierbaren Computer oder einer elektronischen Schaltung. In einigen Ausführungsformen können einige oder mehrere der wichtigsten Verfahrensschritte von einem solchen Gerät ausgeführt werden.

Abhängig von bestimmten Implementierungsanforderungen können Ausführungsformen der Erfindung in Hardware oder in Software implementiert werden. Die Implementierung kann unter Verwendung eines nicht-übertragbaren Speichermediums wie eines digitalen Speichermediums, beispielsweise einer Diskette, einer DVD, einer Blu-Ray, einer CD, eines ROM, eines PROM, eines EPROM, eines EEPROM oder eines FLASH-Speichers erfolgen, auf dem elektronisch lesbare Steuersignale gespeichert sind, die mit einem programmierbaren Computersystem zusammenwirken (oder zusammenwirken können), so dass das jeweilige Verfahren durchgeführt wird. Daher kann das digitale Speichermedium computerlesbar sein.

Einige Ausführungsformen der Erfindung umfassen einen Datenträger mit elektronisch lesbaren Steuersignalen, die in der Lage sind, mit einem programmierbaren Computersystem zusammenzuarbeiten, so dass eines der hier beschriebenen Verfahren durchgeführt wird.

Im Allgemeinen können Ausführungsformen der vorliegenden Erfindung als Computerprogrammprodukt mit einem Programmcode implementiert werden, wobei der Programmcode zur Durchführung eines der Verfahren dient, wenn das Computerprogrammprodukt auf einem Computer läuft. Der Programmcode kann zum Beispiel auf einem maschinenlesbaren Träger gespeichert sein.

Andere Ausführungsformen umfassen das Computerprogramm zur Durchführung eines der hier beschriebenen Verfahren, das auf einem maschinenlesbaren Träger gespeichert ist.

Mit anderen Worten, eine Ausführungsform der vorliegenden Erfindung ist daher ein Computerprogramm mit einem Programmcode zur Durchführung eines der hierin beschriebenen Verfahren, wenn das Computerprogramm auf einem Computer läuft.

Eine weitere Ausführungsform der vorliegenden Erfindung ist daher ein Speichermedium (oder ein Datenträger oder ein computerlesbares Medium), auf dem das Computerprogramm zur Durchführung eines der hierin beschriebenen Verfahren gespeichert ist, wenn es von einem Prozessor ausgeführt wird. Der Datenträger, das digitale Speichermedium oder das aufgezeichnete Medium sind typischerweise greifbar und/oder nicht-übertragbar. Eine weitere Ausführungsform der vorliegenden Erfindung ist ein Gerät, wie hierin beschrieben, mit einem Prozessor und dem Speichermedium.

Eine weitere Ausführungsform der Erfindung ist daher ein Datenstrom oder eine Folge von Signalen, die das Computerprogramm zur Durchführung eines der hierin beschriebenen Verfahren darstellen. Der Datenstrom bzw. die Signalfolge kann beispielsweise so ausgestaltet sein, dass er bzw. sie über eine Datenkommunikationsverbindung, z.B. über das Internet, übertragen werden kann.

Eine weitere Ausführungsform umfasst ein Verarbeitungsmittel, z. B. einen Computer oder ein programmierbares Logikgerät, das so konfiguriert oder angepasst ist, dass es eines der hierin beschriebenen Verfahren durchführen kann.

Eine weitere Ausführungsform umfasst einen Computer, auf dem das Computerprogramm zur Durchführung eines der hierin beschriebenen Verfahren installiert ist.

Eine weitere Ausführungsform der Erfindung umfasst eine Vorrichtung oder ein System, die bzw. das so konfiguriert ist, dass sie bzw. es ein Computerprogramm zur Durchführung eines der hierin beschriebenen Verfahren an einen Empfänger überträgt (z. B. auf elektronischem oder optischem Weg). Bei dem Empfänger kann es sich beispielsweise um einen Computer, ein mobiles Gerät, ein Speichergerät oder dergleichen handeln. Die Vorrichtung oder das System kann zum Beispiel einen Dateiserver zur Übertragung des Computerprogramms an den Empfänger umfassen.

In einigen Ausführungsformen kann eine programmierbare Logikvorrichtung (z. B. ein feldprogrammierbares Gate-Array) verwendet werden, um einige oder alle Funktionen der hier beschriebenen Verfahren auszuführen. In einigen Ausführungsformen kann ein feldprogrammierbares Gate-Array mit einem Mikroprozessor zusammenarbeiten, um eines der hier beschriebenen Verfahren durchzuführen. Im Allgemeinen werden die Verfahren vorzugsweise von einem beliebigen Hardware-Gerät durchgeführt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Maschine, Anlage
- 2: System
- 3: Mastermodul
- 4: Komponente, Verbindungsmodul, Modul, Switch, Kabel
- 5: Geräte, Sensor, Aktor
- 6: Hub
- 8: Steuerungsvorrichtung, SPS
- 9: Schaltschrank

- 11: Identifikator

- 20: Computerprogramm
- 22: Detektionsvorrichtung, Lesegerät

- 30: Vorrichtung
- 31: Computer
- 32: Benutzeroberfläche
- 33: Datenspeicher

- 41: Anzeigeelement
- 42: Anschlussstelle, Steckplatz, Verbindungsstelle

- 50: Verbindungsmodul

- 60: Verbindungselement, Kabel
- 100: Verfahren
- 101: erster Verfahrensschritt
- 102: zweiter Verfahrensschritt
- 103: dritter Verfahrensschritt

- 200: Komponentenkennzeichnung
- 201: Artikelkennzeichnung
- 202: Serienkennzeichnung
- 203: Herstellerkennzeichnung
- 208: Netzwerkadresse

- 230: Installationskennzeichnung

- 300: Installationsvorgabe
- 301: Installationsort

## Patentansprüche

1. Verfahren (100) für eine computer-gestützte Installation von räumlich dezentral angeordneten, elektrischen Komponenten (4) einer Maschine (1), insbesondere einer elektrischen Anlage (1), umfassend:
- Bereitstellen (101) einer Installationsvorgabe (300), insbesondere eines elektrischen Schaltplans (300), welche eine Zuordnung der jeweiligen Komponenten (4) zu einem oder mehreren Installationsorten (301) der Maschine (1) spezifiziert,
wobei die Installationsvorgabe (300) für den einen oder die mehreren Installationsorte (301) jeweils eine Installationskennzeichnung (230), insbesondere Betriebsmittelkennzeichnung, und Artikelkennzeichnung (201), insbesondere Artikelnummer, festlegt,
- Empfangen (102) eines Identifikators (11) einer zu installierenden Komponente (4) der Komponenten (4),
- Zuordnen (103) des empfangenen Identifikators (11) zu wenigstens einer der Installationskennzeichnungen (230) auf Basis der Artikelkennzeichnungen (201) in der Installationsvorgabe (300),
- Ermitteln (104) wenigstens eines der Installationsorte (301) für die Installation der zu installierenden Komponente (4) auf Basis der Zuordnung (103) des empfangenen Identifikators (11).

2. Verfahren (100) nach Anspruch 1,
**dadurch gekennzeichnet,**
**dass** der empfangene Identifikator (11) eine Komponentenkennzeichnung (200) für die zu installierende Komponente (4) umfasst, wobei die Komponentenkennzeichnung (200) eine Serienkennzeichnung (202) und/oder eine Artikelkennzeichnung (201) und/oder eine Herstellerkennzeichnung (203) und/oder Netzwerkadresse (208) umfasst, wobei vorzugsweise die Artikelkennzeichnung (201) der Komponentenkennzeichnung (200) und/oder die in der Installationsvorgabe (300) festgelegten Artikelkennzeichnungen (201) jeweils als Gattungskennzeichnungen der Komponenten (4) ausgeführt sind, wobei das Zuordnen (103) des empfangenen Identifikators (11) ferner umfasst:
- Feststellen einer gattungsgemäßen Eignung der zu installierenden Komponente (4) zur Installation an wenigstens einem der Installationsorte (301), wobei hierzu die zu installierende Komponente (4) wenigstens einer der für die Installationsorte (301) festgelegten Artikelkennzeichnung (201) in der Installationsvorgabe (300) anhand der Artikelkennzeichnung (201) der Komponentenkennzeichnung (200) des empfangenen Identifikators (11) zugeordnet wird, und vorzugsweise dann die Eignung festgestellt wird, wenn die Artikelkennzeichnungen (201) eine Übereinstimmung indizieren,
- Auswählen wenigstens eines der Installationsorte (301), für welche die zu installierende Komponente (4) zur Installation geeignet ist,
- Zuweisen der Komponentenkennzeichnung (200) des empfangenen Identifikators (11) zumindest teilweise, insbesondere zumindest die Serienkennzeichnung (202), zu der für den ausgewählten Installationsort (301) festgelegten Installationskennzeichnung (230).

3. Verfahren (100) nach einem der vorhergehenden Ansprüche,
**dadurch gekennzeichnet,**
**dass** sowohl durch den empfangenen Identifikator (11) als auch durch die Artikelkennzeichnungen (201) in der Installationsvorgabe (300) eine jeweilige Gattung der Komponenten (4) spezifiziert ist, wobei zum Ermitteln des wenigstens einen Installationsortes (301) für die zu installierende Komponente (4) ferner vorgesehen ist:
- Feststellen einer gattungsgemäßen Eignung der zu installierenden Komponente (4) zur Installation an wenigstens einem der Installationsorte (301), dadurch, dass die Gattung der zu installierenden Komponente (4) mit den Gattungen gemäß der Artikelkennzeichnungen (201) in der Installationsvorgabe (300) verglichen wird, um die zu installierende Komponente (4) zur Installation an wenigstens einem der Installationsorte (301) als geeignet einzustufen.

4. Verfahren (100) nach einem der vorhergehenden Ansprüche,
**dadurch gekennzeichnet,**
**dass** der Identifikator (11) eine zumindest eindeutige und bevorzugt eineindeutige Kennzeichnung für die zu installierende Komponente (4) umfasst, um die zu installierende Komponente (4) eindeutig und bevorzugt eineindeutig von den weiteren Komponenten (4), insbesondere auch anderer Hersteller der Komponenten (4), zu unterscheiden, vorzugsweise dadurch, dass eine Kombination aus einer Serienkennzeichnung (202) und Herstellerkennzeichnung (203) oder eine Netzwerkadresse (208) zur Kennzeichnung der Komponente (4) vorgesehen ist und vorzugsweise eine komponentenseitige Installationskennzeichnung (230) funktional bei der zu installierenden Komponente (4) für die Installation ersetzt.

5. Verfahren (100) nach einem der vorhergehenden Ansprüche,
**dadurch gekennzeichnet,**
**dass** das Verfahren (100) die weiteren nachfolgenden Schritte umfasst:
- Auswählen eines der ermittelten Installationsorte (301) zur Installation der zu installierenden Komponente (4), vorzugsweise manuell durch einen Benutzer,
- Ermitteln einer Serienkennzeichnung (202) anhand des empfangenen Identifikators (11), wobei die Serienkennzeichnung (202) eine zumindest eindeutige Kennzeichnung der zu installierenden Komponente (4) bereitstellt,
- Zuweisen der ermittelten Serienkennzeichnung zu derjenigen Installationskennzeichnung (230), welche für den ausgewählten Installationsort (301) festgelegt ist,
- Hinterlegen, vorzugsweise nicht-flüchtiges Speichern, der Zuweisung in der Installationsvorgabe (300), um die Installationsvorgabe (300) zu aktualisieren,
- Bereitstellen der aktualisierten Installationsvorgabe (300) für eine weitere Installation und/oder Wartung der Maschine (1).

6. Verfahren (100) nach einem der vorhergehenden Ansprüche,
**dadurch gekennzeichnet,**
**dass** das Verfahren (100) den weiteren nachfolgenden Schritt umfasst:
- Initiieren einer Ausgabe einer Installationsinformation basierend auf dem Zuordnen (103) des empfangenen Identifikators, wobei die Installationsinformation vorzugsweise eine Angabe des wenigstens einen ermittelten Installationsortes (301) und vorzugsweise des wenigstens einen der Installationsorte (301) umfasst, für welche die zu installierende Komponente (4) zur Installation geeignet ist,
wobei vorzugsweise das Initiieren der Ausgabe zumindest einen der nachfolgenden Schritte umfasst:
- Initiieren einer Anzeige des wenigstens einen ermittelten Installationsortes (301) auf einer Benutzeroberfläche (32) eines Computers (31), wobei die Benutzeroberfläche (32) einen digitalen Zwilling zumindest eines Teils der Maschine (1) visualisiert, und vorzugsweise eine Topologie und/oder einen mechanischen und/oder einen elektrischen Anschlussplan zumindest des Teils der Maschine (1) visualisiert,
- Initiieren einer Anzeige des wenigstens einen ermittelten Installationsortes (301) mittels Virtueller und/oder Erweiterter Realität,
- Initiieren einer akustischen Ausgabe, insbesondere einer Sprachausgabe, der Installationsinformation,
- Initiieren einer grafischen Anzeige der Installationsinformation, vorzugsweise bei einer grafischen Benutzeroberfläche (32), bevorzugt im Zusammenhang mit einer Visualisierung der Maschine (1).

7. Verfahren (100) nach einem der vorhergehenden Ansprüche,
**dadurch gekennzeichnet,**
**dass** das Verfahren (100) die weiteren nachfolgenden Schritte umfasst:
- Auswählen wenigstens eines oder genau eines der ermittelten Installationsorte (301), wobei nur ein Teil der ermittelten Installationsorte (301) ausgewählt wird,
- Identifizieren wenigstens eines Installationsvorschlags für die Installation der zu installierenden Komponente (4) auf Basis der ermittelten Installationsorte (301), wobei durch den wenigstens einen Installationsvorschlag der wenigstens eine oder der genau eine ausgewählte Installationsort (301) angegeben werden, und
- Initiieren einer Ausgabe einer Installationsinformation basierend auf dem wenigstens einen identifizierten Installationsvorschlag.

8. Verfahren (100) nach Anspruch 7,
**dadurch gekennzeichnet,**
**dass** die Installationsinformation eine Installationsanweisung zur Unterstützung eines Benutzers bei der Installation umfasst, wobei das Initiieren der Ausgabe zumindest einen der nachfolgenden Schritte umfasst:
- Initiieren einer Anzeige des wenigstens einen ausgewählten Installationsorts (301) für die zu installierende Komponente (4) auf einer Benutzeroberfläche (32) eines Computers (31), wobei die Benutzeroberfläche (32) einen digitalen Zwilling zumindest eines Teils der Maschine (1) visualisiert, und vorzugsweise eine Topologie und/oder einen mechanischen und/oder einen elektrischen Anschlussplan des Teils der Maschine (1) visualisiert,
- Initiieren einer Anzeige des wenigstens einen ausgewählten Installationsorts (301) der zu installierenden Komponente (4) mittels Virtueller und/oder Erweiterter Realität,
- Initiieren einer Ausgabe der Installationsanweisung als eine Anweisung für den Benutzer, einen gewünschten Installationsort (301) aus einer Liste der mehreren ausgewählten Installationsorte (301) für die Installation zu verwenden und/oder die zu installierende Komponente (4) an dem, vorzugsweise gewünschten, Installationsort (301) zu montieren,
- Initiieren einer akustischen Ausgabe, insbesondere einer Sprachausgabe, der Installationsanweisung,
- Initiieren einer grafischen Anzeige der Installationsanweisung, vorzugsweise bei einer grafischen Benutzeroberfläche (32), bevorzugt im Zusammenhang mit einer Visualisierung der Maschine (1),
- Initiieren einer grafischen Anzeige einer Liste der mehreren ausgewählten Installationsorten (301) basierend auf dem Installationsvorschlag.

9. Verfahren (100) nach einem der vorhergehenden Ansprüche,
**dadurch gekennzeichnet,**
**dass** die Komponenten (4) als elektrische Betriebsmittel der Maschine (1) in der Form einer elektrischen Anlage ausgeführt sind, welche unterschiedlichen Gattungen zugeordnet sind, wobei die Komponenten (4) gemäß einer ersten Gattung mehrere dezentral angeordnete Verbindungselemente (60), insbesondere Kabel, umfassen, und gemäß einer zweiten Gattung mehrere dezentral angeordnete Verbindungsmodule (50) umfassen, wobei die Verbindungsmodule (50) jeweils mehrere Verbindungsstellen (42) zur elektrischen Verbindung mit den Verbindungselementen (60) umfassen, um über die Verbindungselemente (60) weitere Geräte (5) der Maschine (1), insbesondere Sensoren und/oder Aktoren, anzusteuern, und
wobei eine Verschaltung der Komponenten (4) und Geräte (5) dezentral über die Verbindungsmodule (50) erfolgt,
wobei der empfangene Identifikator (11) eine Komponentenkennzeichnung (200) für die zu installierende Komponente (4) umfasst, wobei die Komponentenkennzeichnung (200) abhängig von einer Gattung der zu installierenden Komponente (4) unterschiedliche der folgenden Kennzeichnungen umfasst:
- eine eineindeutige Kennzeichnung,
- eine Serienkennzeichnung (202) und eine Artikelkennzeichnung (201) und eine Herstellerkennzeichnung (203),
- eine Netzwerkadresse (208), vorzugsweise eine MAC-Adresse,
- einen maschinenlesbaren Code, vorzugsweise QR-Code.

10. Verfahren (100) nach einem der vorhergehenden Ansprüche,
**dadurch gekennzeichnet,**
**dass** das Verfahren (100) die folgenden weiteren Schritte umfasst:
- Verifizieren eines ausgewählten Installationsorts (301) der zu installierenden Komponente (4) auf Basis des empfangenen Identifikators (11) und der Installationsvorgabe (300), insbesondere, um festzustellen, ob ein Benutzer die Installationsinformation in der Form einer Installationsanweisung für den ausgewählten Installationsort (301) korrekt umgesetzt hat, wobei bevorzugt in Abhängigkeit von dem Verifizieren eine Kennzeichnung für die Installationsvorgabe (300) hinterlegt wird, und besonders bevorzugt im Falle einer positiven Verifikation der nachfolgende Schritt durchgeführt wird:
- Hinterlegen der Kennzeichnung des Installationsorts (301) als korrekt ausgewählter Installationsort (301) in der Installationsvorgabe (300);
wobei vorteilhafterweise im Falle einer negativen Verifikation zumindest einer der nachfolgenden Schritte durchgeführt wird:
- Hinterlegen einer Kennzeichnung des Installationsorts (301) als geänderter ausgewählter Installationsort (301) in der Installationsvorgabe (300), bevorzugt basierend auf einem vom Benutzer erfassten Installationsparameter, insbesondere einem Anlass oder Grund der Änderung, wobei vorzugsweise eine Angabe zum Anlass oder Grund der Änderung mit hinterlegt wird; und bevorzugt:
- Initiieren einer Korrektur des ausgewählten Installationsorts (301) gemäß der Installationsvorgabe (300).

11. Verfahren (100) nach einem der vorhergehenden Ansprüche,
**dadurch gekennzeichnet,**
**dass** die Installationsvorgabe (300) eine vordefinierte Spezifikation über einen modularen und/oder dezentralen Aufbau der Maschine (1), insbesondere der elektrischen Anlage (1), vorzugsweise einen elektrischen und/oder mechanischen und/oder Netzwerk-Anschlussplan, umfasst, und/oder
**dass** die zu installierende Komponente (4) ein Verbindungselement (60), insbesondere ein Kabel, und/oder ein Verbindungsmodul zur dezentralen Verbindung von Sensoren und/oder Aktoren über Verbindungselemente mit einer Steuerungsvorrichtung (8) ist.

12. Verfahren (100) nach einem der vorhergehenden Ansprüche,
**dadurch gekennzeichnet,**
**dass** der empfangene Identifikator (11) und/oder vorzugsweise eine Komponentenkennzeichnung (200) des empfangenen Identifikators (11) im Gegensatz zur Installationskennzeichnung (230) eine originäre Kennzeichnung der zu installierenden Komponente (4) ist, wobei vorzugsweise der Identifikator (11) und insbesondere die Komponentenkennzeichnung (200) zum Herstellungszeitpunkt und/oder zum Konfektionierungszeitpunkt an die zu installierende Komponente (4) angebracht worden ist, insbesondere aufgedruckt und/oder durch Lasergravur und/oder Laserbeschriftung aufgebracht und/oder geklebt worden ist, wobei der Identifikator (11) bevorzugt einen Code, insbesondere Strichcode oder QR-Code, umfasst, um für das Empfangen (102) durch ein Lesegerät (22) erfasst zu werden.

13. System (2), umfassend:
- wenigstens eine Komponente (4) mit einem Identifikator (11), wobei der Identifikator (11) dazu ausgeführt ist, die Komponente (4) zumindest eindeutig sowie gattungsgemäß zu kennzeichnen,
- ein Lesegerät (22) zum Erfassen des Identifikators (11),
- eine Vorrichtung (30) zur Datenverarbeitung, welche dazu ausgeführt ist, den erfassten Identifikator (11) zu empfangen und zu wenigstens einer Installationskennzeichnung (230) auf Basis von gattungsgemäßen Kennzeichnungen in einer Installationsvorgabe (300) für eine computer-gestützte, dezentrale Installation der elektrischen Komponente (4) bei einer Maschine (1) zuzuordnen.

14. Computerprogramm (20), umfassend Befehle, die bei der Ausführung des Computerprogramms (20) durch einen Computer (31) diesen veranlassen, die Schritte des Verfahrens (100) nach einem der Ansprüche 1 bis 12 auszuführen.

15. Vorrichtung zur Datenverarbeitung, umfassend Mittel zur Ausführung der Schritte des Verfahrens (100) nach einem der Ansprüche 1 bis 12.

## Geänderte Patentansprüche

### Geänderte Patentansprüche gemäss Regel 137(2) EPÜ.

1. Verfahren (100) für eine computer-gestützte Installation von räumlich dezentral angeordneten, elektrischen Komponenten (4) einer Maschine (1), insbesondere einer elektrischen Anlage (1), umfassend:
- Bereitstellen (101) einer Installationsvorgabe (300), in der Form eines elektrischen Schaltplans (300), welche eine Zuordnung der jeweiligen Komponenten (4) zu einem oder mehreren Installationsorten (301) der Maschine (1) spezifiziert,
wobei die Installationsvorgabe (300) für den einen oder die mehreren Installationsorte (301) jeweils eine Installationskennzeichnung (230), in der Form einer Betriebsmittelkennzeichnung, und Artikelkennzeichnung (201), insbesondere Artikelnummer, festlegt,
- Empfangen (102) eines Identifikators (11) einer zu installierenden Komponente (4) der Komponenten (4),
- Zuordnen (103) des empfangenen Identifikators (11) zu wenigstens einer der Installationskennzeichnungen (230) auf Basis der Artikelkennzeichnungen (201) in der Installationsvorgabe (300),
- Ermitteln (104) wenigstens eines der Installationsorte (301) für die Installation der zu installierenden Komponente (4) auf Basis der Zuordnung (103) des empfangenen Identifikators (11).

2. Verfahren (100) nach Anspruch 1,
**dadurch gekennzeichnet,**
**dass** der empfangene Identifikator (11) eine Komponentenkennzeichnung (200) für die zu installierende Komponente (4) umfasst, wobei die Komponentenkennzeichnung (200) eine Serienkennzeichnung (202) und/oder eine Artikelkennzeichnung (201) und/oder eine Herstellerkennzeichnung (203) und/oder Netzwerkadresse (208) umfasst, wobei vorzugsweise die Artikelkennzeichnung (201) der Komponentenkennzeichnung (200) und/oder die in der Installationsvorgabe (300) festgelegten Artikelkennzeichnungen (201) jeweils als Gattungskennzeichnungen der Komponenten (4) ausgeführt sind, wobei das Zuordnen (103) des empfangenen Identifikators (11) ferner umfasst:
- Feststellen einer gattungsgemäßen Eignung der zu installierenden Komponente (4) zur Installation an wenigstens einem der Installationsorte (301), wobei hierzu die zu installierende Komponente (4) wenigstens einer der für die Installationsorte (301) festgelegten Artikelkennzeichnung (201) in der Installationsvorgabe (300) anhand der Artikelkennzeichnung (201) der Komponentenkennzeichnung (200) des empfangenen Identifikators (11) zugeordnet wird, und vorzugsweise dann die Eignung festgestellt wird, wenn die Artikelkennzeichnungen (201) eine Übereinstimmung indizieren,
- Auswählen wenigstens eines der Installationsorte (301), für welche die zu installierende Komponente (4) zur Installation geeignet ist,
- Zuweisen der Komponentenkennzeichnung (200) des empfangenen Identifikators (11) zumindest teilweise, insbesondere zumindest die Serienkennzeichnung (202), zu der für den ausgewählten Installationsort (301) festgelegten Installationskennzeichnung (230).

3. Verfahren (100) nach einem der vorhergehenden Ansprüche,
**dadurch gekennzeichnet,**
**dass** sowohl durch den empfangenen Identifikator (11) als auch durch die Artikelkennzeichnungen (201) in der Installationsvorgabe (300) eine jeweilige Gattung der Komponenten (4) spezifiziert ist, wobei zum Ermitteln des wenigstens einen Installationsortes (301) für die zu installierende Komponente (4) ferner vorgesehen ist:
- Feststellen einer gattungsgemäßen Eignung der zu installierenden Komponente (4) zur Installation an wenigstens einem der Installationsorte (301), dadurch, dass die Gattung der zu installierenden Komponente (4) mit den Gattungen gemäß der Artikelkennzeichnungen (201) in der Installationsvorgabe (300) verglichen wird, um die zu installierende Komponente (4) zur Installation an wenigstens einem der Installationsorte (301) als geeignet einzustufen.

4. Verfahren (100) nach einem der vorhergehenden Ansprüche,
**dadurch gekennzeichnet,**
**dass** der Identifikator (11) eine zumindest eindeutige und bevorzugt eineindeutige Kennzeichnung für die zu installierende Komponente (4) umfasst, um die zu installierende Komponente (4) eindeutig und bevorzugt eineindeutig von den weiteren Komponenten (4), insbesondere auch anderer Hersteller der Komponenten (4), zu unterscheiden, vorzugsweise dadurch, dass eine Kombination aus einer Serienkennzeichnung (202) und Herstellerkennzeichnung (203) oder eine Netzwerkadresse (208) zur Kennzeichnung der Komponente (4) vorgesehen ist und vorzugsweise eine komponentenseitige Installationskennzeichnung (230) funktional bei der zu installierenden Komponente (4) für die Installation ersetzt.

5. Verfahren (100) nach einem der vorhergehenden Ansprüche,
**dadurch gekennzeichnet,**
**dass** das Verfahren (100) die weiteren nachfolgenden Schritte umfasst:
- Auswählen eines der ermittelten Installationsorte (301) zur Installation der zu installierenden Komponente (4), vorzugsweise manuell durch einen Benutzer,
- Ermitteln einer Serienkennzeichnung (202) anhand des empfangenen Identifikators (11), wobei die Serienkennzeichnung (202) eine zumindest eindeutige Kennzeichnung der zu installierenden Komponente (4) bereitstellt,
- Zuweisen der ermittelten Serienkennzeichnung zu derjenigen Installationskennzeichnung (230), welche für den ausgewählten Installationsort (301) festgelegt ist,
- Hinterlegen, vorzugsweise nicht-flüchtiges Speichern, der Zuweisung in der Installationsvorgabe (300), um die Installationsvorgabe (300) zu aktualisieren,
- Bereitstellen der aktualisierten Installationsvorgabe (300) für eine weitere Installation und/oder Wartung der Maschine (1).

6. Verfahren (100) nach einem der vorhergehenden Ansprüche,
**dadurch gekennzeichnet,**
**dass** das Verfahren (100) den weiteren nachfolgenden Schritt umfasst:
- Initiieren einer Ausgabe einer Installationsinformation basierend auf dem Zuordnen (103) des empfangenen Identifikators, wobei die Installationsinformation vorzugsweise eine Angabe des wenigstens einen ermittelten Installationsortes (301) und vorzugsweise des wenigstens einen der Installationsorte (301) umfasst, für welche die zu installierende Komponente (4) zur Installation geeignet ist,
wobei vorzugsweise das Initiieren der Ausgabe zumindest einen der nachfolgenden Schritte umfasst:
- Initiieren einer Anzeige des wenigstens einen ermittelten Installationsortes (301) auf einer Benutzeroberfläche (32) eines Computers (31), wobei die Benutzeroberfläche (32) einen digitalen Zwilling zumindest eines Teils der Maschine (1) visualisiert, und vorzugsweise eine Topologie und/oder einen mechanischen und/oder einen elektrischen Anschlussplan zumindest des Teils der Maschine (1) visualisiert,
- Initiieren einer Anzeige des wenigstens einen ermittelten Installationsortes (301) mittels Virtueller und/oder Erweiterter Realität,
- Initiieren einer akustischen Ausgabe, insbesondere einer Sprachausgabe, der Installationsinformation,
- Initiieren einer grafischen Anzeige der Installationsinformation, vorzugsweise bei einer grafischen Benutzeroberfläche (32), bevorzugt im Zusammenhang mit einer Visualisierung der Maschine (1).

7. Verfahren (100) nach einem der vorhergehenden Ansprüche,
**dadurch gekennzeichnet,**
**dass** das Verfahren (100) die weiteren nachfolgenden Schritte umfasst:
- Auswählen wenigstens eines oder genau eines der ermittelten Installationsorte (301), wobei nur ein Teil der ermittelten Installationsorte (301) ausgewählt wird,
- Identifizieren wenigstens eines Installationsvorschlags für die Installation der zu installierenden Komponente (4) auf Basis der ermittelten Installationsorte (301), wobei durch den wenigstens einen Installationsvorschlag der wenigstens eine oder der genau eine ausgewählte Installationsort (301) angegeben werden, und
- Initiieren einer Ausgabe einer Installationsinformation basierend auf dem wenigstens einen identifizierten Installationsvorschlag.

8. Verfahren (100) nach Anspruch 7,
**dadurch gekennzeichnet,**
**dass** die Installationsinformation eine Installationsanweisung zur Unterstützung eines Benutzers bei der Installation umfasst, wobei das Initiieren der Ausgabe zumindest einen der nachfolgenden Schritte umfasst:
- Initiieren einer Anzeige des wenigstens einen ausgewählten Installationsorts (301) für die zu installierende Komponente (4) auf einer Benutzeroberfläche (32) eines Computers (31), wobei die Benutzeroberfläche (32) einen digitalen Zwilling zumindest eines Teils der Maschine (1) visualisiert, und vorzugsweise eine Topologie und/oder einen mechanischen und/oder einen elektrischen Anschlussplan des Teils der Maschine (1) visualisiert,
- Initiieren einer Anzeige des wenigstens einen ausgewählten Installationsorts (301) der zu installierenden Komponente (4) mittels Virtueller und/oder Erweiterter Realität,
- Initiieren einer Ausgabe der Installationsanweisung als eine Anweisung für den Benutzer, einen gewünschten Installationsort (301) aus einer Liste der mehreren ausgewählten Installationsorte (301) für die Installation zu verwenden und/oder die zu installierende Komponente (4) an dem, vorzugsweise gewünschten, Installationsort (301) zu montieren,
- Initiieren einer akustischen Ausgabe, insbesondere einer Sprachausgabe, der Installationsanweisung,
- Initiieren einer grafischen Anzeige der Installationsanweisung, vorzugsweise bei einer grafischen Benutzeroberfläche (32), bevorzugt im Zusammenhang mit einer Visualisierung der Maschine (1),
- Initiieren einer grafischen Anzeige einer Liste der mehreren ausgewählten Installationsorten (301) basierend auf dem Installationsvorschlag.

9. Verfahren (100) nach einem der vorhergehenden Ansprüche,
**dadurch gekennzeichnet,**
**dass** die Komponenten (4) als elektrische Betriebsmittel der Maschine (1) in der Form einer elektrischen Anlage ausgeführt sind, welche unterschiedlichen Gattungen zugeordnet sind, wobei die Komponenten (4) gemäß einer ersten Gattung mehrere dezentral angeordnete Verbindungselemente (60), insbesondere Kabel, umfassen, und gemäß einer zweiten Gattung mehrere dezentral angeordnete Verbindungsmodule (50) umfassen, wobei die Verbindungsmodule (50) jeweils mehrere Verbindungsstellen (42) zur elektrischen Verbindung mit den Verbindungselementen (60) umfassen, um über die Verbindungselemente (60) weitere Geräte (5) der Maschine (1), insbesondere Sensoren und/oder Aktoren, anzusteuern, und
wobei eine Verschaltung der Komponenten (4) und Geräte (5) dezentral über die Verbindungsmodule (50) erfolgt,
wobei der empfangene Identifikator (11) eine Komponentenkennzeichnung (200) für die zu installierende Komponente (4) umfasst, wobei die Komponentenkennzeichnung (200) abhängig von einer Gattung der zu installierenden Komponente (4) unterschiedliche der folgenden Kennzeichnungen umfasst:
- eine eineindeutige Kennzeichnung,
- eine Serienkennzeichnung (202) und eine Artikelkennzeichnung (201) und eine Herstellerkennzeichnung (203),
- eine Netzwerkadresse (208), vorzugsweise eine MAC-Adresse,
- einen maschinenlesbaren Code, vorzugsweise QR-Code.

10. Verfahren (100) nach einem der vorhergehenden Ansprüche,
**dadurch gekennzeichnet,**
**dass** das Verfahren (100) die folgenden weiteren Schritte umfasst:
- Verifizieren eines ausgewählten Installationsorts (301) der zu installierenden Komponente (4) auf Basis des empfangenen Identifikators (11) und der Installationsvorgabe (300), insbesondere, um festzustellen, ob ein Benutzer die Installationsinformation in der Form einer Installationsanweisung für den ausgewählten Installationsort (301) korrekt umgesetzt hat, wobei bevorzugt in Abhängigkeit von dem Verifizieren eine Kennzeichnung für die Installationsvorgabe (300) hinterlegt wird, und besonders bevorzugt im Falle einer positiven Verifikation der nachfolgende Schritt durchgeführt wird:
- Hinterlegen der Kennzeichnung des Installationsorts (301) als korrekt ausgewählter Installationsort (301) in der Installationsvorgabe (300);
wobei vorteilhafterweise im Falle einer negativen Verifikation zumindest einer der nachfolgenden Schritte durchgeführt wird:
- Hinterlegen einer Kennzeichnung des Installationsorts (301) als geänderter ausgewählter Installationsort (301) in der Installationsvorgabe (300), bevorzugt basierend auf einem vom Benutzer erfassten Installationsparameter, insbesondere einem Anlass oder Grund der Änderung, wobei vorzugsweise eine Angabe zum Anlass oder Grund der Änderung mit hinterlegt wird; und bevorzugt:
- Initiieren einer Korrektur des ausgewählten Installationsorts (301) gemäß der Installationsvorgabe (300).

11. Verfahren (100) nach einem der vorhergehenden Ansprüche,
**dadurch gekennzeichnet,**
**dass** die Installationsvorgabe (300) eine vordefinierte Spezifikation über einen modularen und/oder dezentralen Aufbau der Maschine (1), insbesondere der elektrischen Anlage (1), vorzugsweise einen elektrischen und/oder mechanischen und/oder Netzwerk-Anschlussplan, umfasst, und/oder dass die zu installierende Komponente (4) ein Verbindungselement (60), insbesondere ein Kabel, und/oder ein Verbindungsmodul zur dezentralen Verbindung von Sensoren und/oder Aktoren über Verbindungselemente mit einer Steuerungsvorrichtung (8) ist.

12. Verfahren (100) nach einem der vorhergehenden Ansprüche,
**dadurch gekennzeichnet,**
**dass** der empfangene Identifikator (11) und/oder vorzugsweise eine Komponentenkennzeichnung (200) des empfangenen Identifikators (11) im Gegensatz zur Installationskennzeichnung (230) eine originäre Kennzeichnung der zu installierenden Komponente (4) ist, wobei vorzugsweise der Identifikator (11) und insbesondere die Komponentenkennzeichnung (200) zum Herstellungszeitpunkt und/oder zum Konfektionierungszeitpunkt an die zu installierende Komponente (4) angebracht worden ist, insbesondere aufgedruckt und/oder durch Lasergravur und/oder Laserbeschriftung aufgebracht und/oder geklebt worden ist, wobei der Identifikator (11) bevorzugt einen Code, insbesondere Strichcode oder QR-Code, umfasst, um für das Empfangen (102) durch ein Lesegerät (22) erfasst zu werden.

13. System (2), umfassend:
- wenigstens eine Komponente (4) mit einem Identifikator (11), wobei der Identifikator (11) dazu ausgeführt ist, die Komponente (4) zumindest eindeutig sowie gattungsgemäß zu kennzeichnen,
- ein Lesegerät (22) zum Erfassen des Identifikators (11),
- eine Vorrichtung (30) zur Datenverarbeitung, welche dazu ausgeführt ist, den erfassten Identifikator (11) zu empfangen und zu wenigstens einer Installationskennzeichnung (230) auf Basis von gattungsgemäßen Kennzeichnungen in einer Installationsvorgabe (300) für eine computer-gestützte, dezentrale Installation der elektrischen Komponente (4) bei einer Maschine (1) zuzuordnen.

14. Computerprogramm (20), umfassend Befehle, die bei der Ausführung des Computerprogramms (20) durch einen Computer (31) diesen veranlassen, die Schritte des Verfahrens (100) nach einem der Ansprüche 1 bis 12 auszuführen.

15. Vorrichtung zur Datenverarbeitung, umfassend Mittel zur Ausführung der Schritte des Verfahrens (100) nach einem der Ansprüche 1 bis 12.
